Europäisches Patentamt

European Patent Office

Office européen des brevets

(19)

(11) Veröffentlichungsnummer: **0 031 458**
**A2**

(12) EUROPÄISCHE PATENTANMELDUNG

(21) Anmeldenummer: **80107321.4**

(22) Anmeldetag: **24.11.80**

(51) Int. Cl.³: **H 04 N 7/00, H 04 H 1/06**

(30) Priorität: **20.12.79 DE 2951480**

(43) Veröffentlichungstag der Anmeldung: **08.07.81**
**Patentblatt 81/27**

(84) Benannte Vertragsstaaten: **AT BE CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Panzer, Klaus, Dr. Ing., Strassebergerstrasse 47, D-8000 München 40 (DE)**

(54) Lichtwellenleiter-Frequenzmultiplex-Übertragungssystem.

(57) Die Erfindung bezieht sich auf ein Breitbandkommunikationssystem, in dem frequenzmodulierte Signale im Frequenzmultiplex über einen Lichtwellenleiter (AL) übertragen werden, wobei der Lichtwellenleiter (AL) insbesondere von einer Zentrale zu einem Teilnehmeranschluß (T) führen kann. In einem solchen System wird gemeinsam mit einer Anzahl von z.B. 3 Videoprogramm-Signalen eine Mehrzahl von z. B. 20 Tonprogramm-Signalen übertragen, wobei zur Erhöhung des empfangsseitigen Signal-Geräusch-Abstandes trotz niedrigen Sendepegels die Tonprogramm-Signale mit einem die maximale Modulationsfrequenz um etwa 1 bis 2 Größenordnungen übersteigenden Frequenzhub moduliert sind. Auch der Frequenzhub der Videoprogramm-Signale kann größer als üblich sein; er kann die maximale Modulationsfrequenz um etwa das Doppelte bis ½ Größenordnung übersteigen. Die Videoprogramm-Signale (Pv) können zu dem jeweiligen Lichtwellenleiter (AL) über eine Breitband-Koppelanordnung (BK) mit frequenzkanalindividuellen Koppelebenen (KE1...KE3) vermittelt werden; die Tonprogramm-Signale (Ph) können ständig an die Lichtwellenleiter (AL) angeschaltet sein.

0031458

SIEMENS AKTIENGESELLSCHAFT       Unser Zeichen
Berlin und München               VPA   79 P 7 8 1 6 EUR

Lichtwellenleiter-Frequenzmultiplex-Übertragungssystem

Die Erfindung bezieht sich auf ein Frequenzmultiplex-Übertragungssystem zur gemeinsamen Übertragung von frequenzmodulierten Signalen über einen Lichtwellenleiter, insbesondere zwischen einer Zentrale und einem Teilnehmeranschluß. Mit einem solchen Frequenzmultiplex-Übertragungssystem können z.B. TV- und Tonrundfunk-Programme zu Teilnehmern, die solche Programme empfangen wollen, hin übertragen werden, wie dies neuere Entwicklungen der Fernmeldetechnik mit sich bringen, die zu Breitbandkommunikationsnetzen mit durch Lichtwellenleiter gebildeten Teilnehmerleitungen führen, wobei sich in der Teilnehmerebene ein Sternnetz von Lichtwellenleitern mit einem Lichtwellenleiter je Wohnungseinheit als zweckmäßig erweist, der eine (zweckmäßigerweise mit der nächstgelegenen Fernsprech-Vermittlungsstelle räumlich vereinigte) zentrale Verteiler- bzw. Vermittlungsstelle mit der Wohnung des Teilnehmers verbindet und über den ggf. alle Fernmeldedienste für die betreffende Wohneinheit abgewickelt werden können, wobei für einen zukunftssicheren Wohnungsanschluß beispielsweise die Bereitstellung zumindest etwa folgender Kommunikationsmöglichkeiten in Frage kommt:

3 Videokanäle für 3 Video-Empfänger mit unabhängigem Zugriff zu allen von der Verteilungs- bzw. Vermittlungsstelle erreichbaren TV-Signalquellen bzw. dort verfügbaren TV-Programmen,
ggf. 3 Rückkanäle zur Programmauswahl und ggf. auch zur Abwicklung interaktiver Dienste
sowie 20 Stereo-Hörfunkkanäle
(ntz 32(1979)3, 150...153; AntennenInformation Nr.63, Juni 1979, S. 3...5).

Spr 1 Kel /19.12.1979

Für die den Lichtwellenleitern eines solchen Breitband-kommunikationsnetzes zur Signalumsetzung jeweils vorzu-schaltenden elektrooptischen Wandler, d.h. als optische Sender, kommen (einfacher herzustellende und ohne Regelung betreibbare) sog. lichtemittierende Dioden (LED) und (größere Bandbreite und größere Signalleistung bietende) Laserdioden in Frage, deren Eigenschaften dem Übertragungssystem allerdings auch gewisse Grenzen setzen. So weist die Elektro/Opto-Wandlerkennlinie solcher Dioden nur einen begrenzten Bereich angenäherter Linearität auf, so daß insbesondere bei einer größeren Anzahl von den elektrooptischen Wandler gleichzeitig aussteuernden Signalen, wie im Beispiel bei der Ansteuerung durch 20 Stereo-Tonprogramm-Signale, die Aussteuersignalpegel entsprechend begrenzt sein müssen. Auf der anderen Seite muß aber sichergestellt werden, daß die über den Lichtwellenleiter übertragenen Signale empfangsseitig hinter dem durch eine Fotodiode, bspw. Avalanche-Fotodiode, zu realisierenden optoelektrischen Wandler noch ein akzeptables Signal/Geräusch-Verhältnis aufweisen, was an sich einen entsprechend hohen sendeseitigen Aussteuersignalpegel erfordert. Die Erfindung zeigt nun einen Weg, solchen widersprüchlichen Bedingungen in zweckmäßiger Weise Rechnung zu tragen.

Die Erfindung betrifft ein Frequwnzmultiplex-Übertragungssystem zur gemeinsamen Übertragung von frequenzmodulierten Signalen über einen Lichtwellenleiter, insbesondere zwischen einer Zentrale und einem Teilnehmeranschluß; dieses Frequenzmultiplex-Übertragungssystem ist erfindungsgemäß dadurch gekennzeichnet, daß in einer Mehrzahl gemeinsam mit einer Anzahl von Videoprogramm-Signalen zu übertragende Tonprogramm-Signale mit einem die maximale Modulationsfrequenz um etwa 1 bis 2 Größenordnungen (Zehnerpotenzen) übersteigenden Frequenzhub moduliert sind.

Die die hohe Bandbreite des Lichtwellenleiter-Übertragungssystems sich für eine Frequenzmultiplexübertragung von mit vergrößertem, dabei aber noch Abstand von der sogenannten FM-Schwelle haltenden Frequenzhub frequenzmodulierten Tonprogramm-Signalen zu Nutzen machende Erfindung bringt den Vorteil mit sich, trotz ungünstiger Gegebenheiten bei den elektrooptischen Wandlern, wie des bei hinreichender Linearität bei zunehmender Anzahl von Tonprogramm-Trägern zunehmend kleineren Aussteuerbereichs, empfangsseitig relativ hohe Signal/Geräusch-Abstände zu erzielen bzw. bei Einhaltung eines für den Signal/Geräusch-Abstand vorgegebenen Grenzwertes eine entsprechend hohe Streckendämpfung überwinden zu können.

In weiterer Ausgestaltung der Erfindung können die Videoprogramm-Signale mit einem die maximale Modulationsfrequenz um etwa das Doppelte bis 1/2 Größenordnung (Zehnerpotenz) übersteigenden Frequenzhub moduliert sein; dies bringt den weiteren Vorteil erhöhter Signal/Geräusch-Abstände auch für die Videosignale mit sich.

Anhand der Zeichnung sei die Erfindung noch näher erläutert. Dabei zeigt
Fig.1 ein Ausführungsbeispiel für ein Frequenzmultiplex-Übertragungssystem gemäß der Erfindung;
Fig.2 verdeutlicht die Lage von Frequenzkanälen im Frequenzmultiplexsystem.

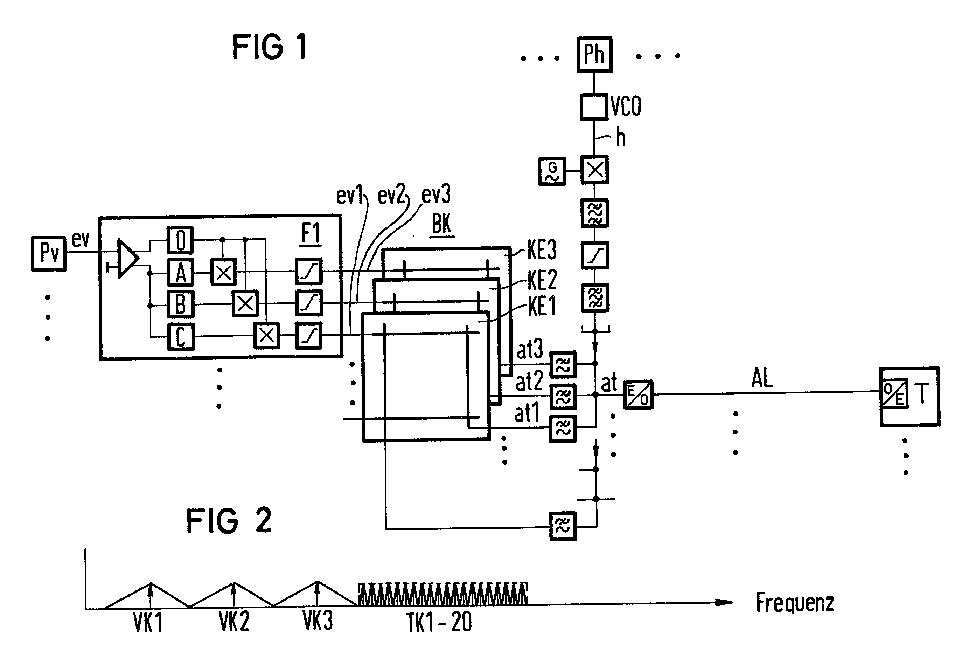

In der Zeichnung Fig.1 ist schematisch in einem zum Verständnis der Erfindung erforderlichen Umfange ein ein Frequenzmultiplex-Übertragungssystem gemäß der Erfindung einschließendes Breitbandkommunikationssystem dargestellt, in dem mit Video-Programmen bzw. Ton-(Hörfunk-)Programmen frequenzmodulierte Signale im Frequenzmultiplex über Lichtwellenleiter AL ,... zu Teilnehmeranschlüssen T ,... übertragbar sind; diese Teilnehmeranschlüsse mögen z.B. jeweils einen Wohnungsanschluß

bilden, zu/von dem in der eingangs erläuterten Weise jeweils eine Mehrzahl von Kommunikationsmöglichkeiten gegeben sein mag. Jeder Lichtwellenleiter AL ist jeweils sendeseitig an einen beispielsweise durch eine lichtemittierende Diode (LED) oder eine Laserdiode gegebenen elektrooptischen Wandler E/O angeschlossen und jeweils empfangsseitig durch einen mit einer Fotodiode, beispielsweise Avalanche-Fotodiode, realisierbaren optoelektrischen Wandler O/E abgeschlossen. Der Eingang des elektrooptischen Wandlers E/O liegt an einem teilnehmerindividuellen Schaltungspunkt at, an dem die dem betreffenden Teilnehmer T jeweils zuzuführenden Video- und Tonprogramme im Frequenzmultiplex zusammengefaßt werden.

Die Videoprogramm-Signale werden dem Schaltungspunkt at von entsprechenden Videoprogrammquellen, wie der in Fig.1 angedeuteten Programmquelle Pv, über eine Breitband-Koppelanordnung BK zugeführt. Hierzu sind die einzelnen Videoprogrammquellen Pv,... über Frequenzmodulationsschaltungen F1 ,... an signalquellenindividuelle Eingänge ev1, ev2, ev3;... der Breitband-Koppelanordnung BK angeschlossen, an deren teilnehmerindividuelle Ausgänge at1, at2, at3;... die Teilnehmer T,... angeschlossen sind; über in der Zeichnung nicht näher dargestellte Koppelpunktschalter sind die einzelnen Eingangsleitungen ev1, ev2, ev3;... mit den Ausgangsleitungen at1, at2, at3;... verbindbar.
Die Koppelpunktschalter können dabei in (z.B. aus DE-AS 28 28 662) bekannter Weise durch vorzugsweise in ECL-Technik realisierte Verknüpfungsglieder, z.B. durch UND-Glieder beispielsweise des Typs 10 104 und/oder durch NOR-Glieder beispielsweise des Typs 10 102 gebildet sein; sie können auch jeweils zu mehreren monolithisch-integriert auf einem Chip zusammengefaßt sein.

Über die Breitband-Koppelanordnung BK sind deren teilnehmerindividuelle Ausgänge jeweils in teilnehmerindividuell (vorzugsweise über Teilnehmer-Rückkanäle, wie sie eingangs erwähnt wurden,) bestimmten Frequenzkanälen des Frequenzmultiplexsystems mit einem jeweils gewünschten signalquellenindividuellen Eingang der Breitband-Koppelanordnung verbindbar. Hierzu sei ein Blick auf die Zeichnung Fig.2 geworfen, die die Lage der Frequenzbänder solcher Videoprogramm-Frequenzkanäle im Frequenzmultiplexsystem verdeutlicht. Solche Videoprogramm-Frequenzkanäle sind dort mit VK1, VK2, VK3 bezeichnet; mit TK1-20 ist ein weiterer Bereich bezeichnet, in dem schmalerbandige Tonprogramm-Frequenzkanäle untergebracht sein mögen, wie dies unten noch näher erläutert wird. Die drei Breitbandkanäle VK1, VK2, VK3 können z.B. Trägerfrequenzen von etwa 30 MHz, 70 MHz, 110 MHz bei Kanalbreiten von etwa 40 MHz aufweisen; der Bereich TK1-20 könnte z.B. von etwa 130 bis 210 MHz reichen und z.B. 20 Kanäle mit Kanalbreiten von etwa 4 MHz enthalten.

In den einzelnen, vorzugsweise nach Maßgabe des jeweiligen Empfängers einer Mehrzahl von beim jeweiligen Teilnehmer T... vorgesehenen Empfängern bestimmten Frequenzkanälen VK kann ein Teilnehmer T über die jeweils in Frage kommenden Koppelpunktschalter mit den einzelnen signalquellenindividuellen Eingängen ev1, ev2, ev3;... der Breitband-Koppelanordnung BK verbunden sein, wobei ein Teilnehmer T ggf. auch in mehreren Frequenzkanälen an ein und dieselbe Videoprogrammquelle Pv... angeschaltet sein kann.

Hierzu weist die Breitband-Koppelanordnung BK frequenzkanalindividuelle Koppelebenen KE1, KE2, KE3 auf, und es werden die von den einzelnen Breitbandsignalquellen Pv,... her frequenzmodulierten Signale in einer der Anzahl der gleichzeitig mit ein und demselben Teilnehmer T,... verbindbaren Breitbandsignalquellen Pv,... entsprechenden Mehrzahl von Frequenzkanälen VK1, VK2, VK3 (in Fig.2) des Frequenzmultiplexsystems signalquellenindividuellen Eingängen ev1, ev2, ev3;... der einzelnen frequenzkanalindividuellen Koppelebenen KE1, KE2, KE3 der Breitband-Koppelanordnung BK zugeführt. Den im Beispiel jeweils 3 bzw., allgemeiner gesagt, n signalquellenindividuellen Eingängen ev1, ev2, ev3;... in die n (= 3) frequenzkanalindividuellen Koppelebenen KE der Breitband-Koppelanordnung BK ist dazu jeweils eine Frequenzmodulationsschaltung Fv... vorgeschaltet, die eingangsseitig von der zugehörigen Videoprogrammquelle Pv... mit deren Breitbandsignal beaufschlagt wird. Die Frequenzmodulationsschaltung Fv enthält im Beispiel n = 3 Frequenzmodulatoren, die durch n gegen-phasig zu einem (n+1)-ten spannungsgesteuerten Oszilla-tor O mit dem Breitbandsignal beaufschlagte, jeweils zusammen mit dem (n+1)-ten Oszillator O einen Mischer, beispielsweise einen Siemens-Mischer S042, beaufschlagende spannungsgesteuerte Oszillatoren A, B, C gebildet sind; bei bereits der Trägerfrequenz entsprechender Oszillatorfrequenz kann ggf. auch der Mischer entfallen. Wie in Fig.1 angedeutet ist, kann den einzelnen Mischern jeweils ein Begrenzer nachgeschaltet sein, um eine Anpassung an den Koppelpunkt zu erzielen, wenn als Koppelpunkte die bereits angesprochenen Verknüpfungsglieder verwendet werden.

Mit Hilfe der Frequenzmodulationsschaltung Fv ... wird sichergestellt, daß jedes von einer Videoprogrammquelle Pv ... gelieferte Videoprogramm in jedem der Frequenzkanäle VK1, VK2, VK3 an jeweils einem signalquellenindividuellen Eingang ev1, ev2, ev3;... der Breitband-Koppelanordnung in Form eines entsprechend frequenzmodulierten Videoprogramm-Signals verfügbar ist und dementsprechend über die jeweils in Frage kommenden Koppelpunktschalter zu den einzelnen teilnehmerindividuellen
Ausgängen at1, at2, at3;... und weiter im Frequenzmultiplex über den zum jeweiligen Teilnehmer T ... führende
Lichtwellenleiter AL,... zu den einzelnen Teilnehmern hin
vermittelt werden kann.

In dem in Fig.1 dargestellten Ausführungsbeispiel
sind dabei den genannten teilnehmerindividuellen Ausgängen jeweils oberwellenunterdrückende Filter nachgeschaltet, die ausgangsseitig jeweils in dem genannten
teilnehmerindividuellen Schaltungspunkt at ... zusammengeschaltet sind.

Wie aus Fig.1 weiter ersichtlich wird, ist mit den
teilnehmerindividuellen Schaltungspunkten at, ... weiterhin eine Mehrzahl von schmalerbandigen Tonprogrammquellen ..., Ph,... verbunden, so daß diese Tonprogrammquellen, wie die in Fig.1 dargestellte Programmquelle Ph,
in weiteren, schmalerbandigen Frequenzkanälen des Frequenzmultiplexsystems (Frequenzbereich TK1-20 in Fig.2)
ständig mit dem zum jeweiligen Teilnehmer T ... führenden
Lichtwellenleiter AL ... verbunden sind. In entsprechender
Weise können übrigens auch zusätzliche Breitbandsignalquellen, insbesondere Videoprogrammquellen, in zusätzlichen
Frequenzkanälen des Frequenzmultiplexsystems ständig mit
den zu den Teilnehmern T ... führenden Lichtwellenleitern
AL verbunden sein, ohne daß dies in Fig.1 noch näher
dargestellt ist.

Bei der gemeinsam mit einer Anzahl von im Beispiel bis
zu 3 vermittelbaren Videoprogramm-Signalen über den jeweiligen Lichtwellenleiter AL zu dem jeweiligen Teilnehmeranschluß T hin im Frequenzbereich TK1-20 (in Fig.2)
zu übertragenden Mehrzahl von beispielsweise 20 Tonprogramm-Signalen sind nun die Tonprogramm-Signale mit
einem die maximale Modulationsfrequenz etwa 1 bis 2
Größenordnungen (Zehnerpotenzen) übersteigenden Frequenzhub moduliert. Dazu ist im Ausführungsbeispiel gemäß Fig.1 einem von der Tonprogrammquelle Ph in seiner Frequenz modulierten spannungsgesteuerten Oszillator VCO (bzw. einem Empfänger, der das von einem UKW-Rundfunksender ausgestrahlte Programm empfängt (, aber noch nicht demoduliert),) eine Frequenzhuberhöhungsschaltung nachgeschaltet, die den Frequenzhub um etwa 1 bis 2 Größenordnungen größer als die maximale Modulationsfrequenz machen möge. Hierzu kann, wie dies aus Fig.1 ersichtlich wird, das mit dem Tonprogramm frequenzmodulierte Signal, das auf der Leitung h auftritt, in bekannter Weise auf eine Zwischenfrequenz umgesetzt werden, die beispielsweise etwa bei 6,5...10,5 MHz liegen mag, wonach das umgesetzte Signal begrenzt wird, so daß man ein sehr oberwellenreiches Signal erhält. Hieraus wird dann mittels eines Bandpaßfilters eine Oberwelle weitergeleitet, deren sich kanalrichtig in das Frequenzraster des Frequenzbereiches TK1-20 (in Fig.2) einordnende Frequenz um etwa 1 bis 2 Größenordnungen, im Beispiel um den Faktor 20, größer als die Zwischenfrequenz ist und deren Frequenzhub damit ebenfalls um etwa 1 bis 2 Größenordnungen (Zehnerpotenzen) größer als zuvor - nach dem Pilottonverfahren codiert übertragene Stereo-Tonrundfunksignale weisen einen Modulationsindex in der Größenordnung von 1 auf - ist. Die Videoprogramm-Signale sind zweckmäßigerweise mit einem die maximale Modulationsfrequenz um etwa das Doppelte bis eine halbe Größenordnung überschreitenden Frequenzhub moduliert.

Die Frequenzmultiplexübertragung der mit vergrößertem Frequenzhub frequenzmodulierten Tonprogramm-Signale und ggf. auch Videoprogramm-Signale hat zur Folge, daß empfangsseitig, wo in den Empfangsgeräten entsprechende Großhub-FM-Tuner vorzusehen sind, ein hohes Signal/Geräusch-Verhältnis S/N bereits bei Aussteuerung des elektrooptischen Wandlers E/O mit noch niedrigen Signalpegeln erreicht wird, die eine gleichzeitige Beaufschlagung des elektrooptischen

0031458
79 P7 8 1 6 EUR

Wandlers E/O mit einer entsprechend großen Anzahl von Programmträgern ermöglichen. Sind etwa gemäß dem eingangs angeführten Beispiel 3 Videoprogramm-Kanäle und 20 Stereo-Tonprogramm-Kanäle im Frequenzmultiplexsystem vorgesehen, so läßt sich ein - durch das Verhältnis von BA-Wert (70 % des Signals, d.h. 0,7 V beim Videonormpegel 1 $V_{ss}$) zur effektiven, auf 5 MHz bandbegrenzten und (nach CCIR, Rec.567) bewerteten Rauschspannung gegebener - Geräuschabstand in der Videoebene $(S/N)_V$ von 52 dB oder 56 dB bei einem durch das Verhältnis von Frequenzhub zu maximaler Modulationsfrequenz gegebenen Modulationsindex $\eta$ von maximal etwa 3,5 bzw. 4,8 erzielen, wobei Videoprogramm-Kanalbandbreiten von (je nach den Eigenschaften des Demodulators) etwa 30 bis 45 MHz bzw. 40 bis 60 MHz beansprucht werden. Geräuschabstände in der Tonebene $(S/N)_T$ von beispielsweise 54 dB, 60 dB oder 70 dB lassen sich bei einem Modulationsindex $\eta$ von maximal etwa 35 bzw. 55 bzw. 120 erzielen, wobei Tonprogramm-Kanalbandbreiten von etwa 5 MHz bzw. 7,5 MHz bzw. 16 MHz beansprucht werden.

2 Patentansprüche
2 Figuren

## Patentansprüche

1. Frequenzmultiplex-Übertragungssystem zur gemeinsamen Übertragung von frequenzmodulierten Signalen über einen Lichtwellenleiter, insbesondere zwischen einer Zentrale und einem Teilnehmeranschluß, dadurch gekennzeichnet, daß in einer Mehrzahl gemeinsam mit einer Anzahl von Videoprogramm-Signalen (VK1, VK2, VK3) über den Lichtwellenleiter (AL) zu übertragende Tonprogramm-Signale (TK1-20) mit einem die maximale Modulationsfrequenz um etwa 1 bis 2 Größenordnungen übersteigenden Frequenzhub moduliert sind.

2. Frequenzmultiplex-Übertragungssystem nach Anspruch 1, dadurch gekennzeichnet, daß die Videoprogramm-Signale (VK1, VK2, VK3) mit einem die maximale Modulationsfrequenz um etwa das Doppelte bis 1/2 Größenordnung übersteigenden Frequenzhub moduliert sind.

0031458

FIG 1

FIG 2

Frequenz

TK1-20

VK1  VK2  VK3